# EUROPEAN PATENT SPECIFICATION

(11) **EP 3 480 452 B1**
(45) Date of publication and mention of the grant of the patent: **04.08.2021**
(21) Application number: 16907489.5
(22) Date of filing: 30.06.2016
(51) Int. Cl.: F03B 13/14, B63B 35/58, F03B 13/18

(54) **FLOATING INSTALLATION FOR UTILIZING WAVE ENERGY AND AUTONOMOUS CATAMARAN WITH SUCH AN INSTALLATION**
SCHWIMMENDE ANLAGE ZUR NUTZUNG VON WELLENENERGIE UND AUTONOMER KATAMARAN MIT SOLCH EINER ANLAGE
INSTALLATION FLOTTANTE UTILISANT L'ÉNERGIE DES VAGUES ET CATAMARAN AUTONOME UTILISANT CETTE INSTALLATION

(43) Date of publication of application: 08.05.2019
(73) Proprietor: Beylin, Georgiy Volodimirovich, Kyiv 02222 (UA); Petrenko, Sergiy Yriiovich, Kiev 02222 (UA)
(72) Inventor: Beylin, Georgiy Volodimirovich, Kyiv 02222 (UA); Petrenko, Sergiy Yriiovich, Kiev 02222 (UA)
(74) Representative: Sloboshanin, Sergej
(86) International application number: PCT/UA2016/000075
(87) International publication number: WO 2018/004504

(56) References cited:
- DE-A1- 3 642 060
- DE-A1- 19 900 614
- DE-A1-102005 017 040
- GB-A- 1 542 251
- RU-C1- 2 041 385
- SU-A1- 1 756 602
- US-A- 1 270 221
- US-A1- 2008 018 114
- US-A1- 2011 042 954
- GREI SERGEI: "Avtonomnyi katamaran otpravilsia issledovat keltskoe more", Novosti vysokikh tekhnologii, 21 August 2015 (2015-08-21), XP009513135, Retrieved from the Internet: URL:https://hi-news.ru/research-developmen t/avtonomnyj-katamaran-otpravilsya-issledo vat-keltskoe-more.html [retrieved on 2017-02-13]

## Description

The proposed invention relates to a special purpose machines, particularly, power generating assemblies and their integration into vehicles; as well as to shipbuilding, namely to a floating assembly for use of (primarily sea) waves energy, and to a design of autonomous catamaran comprising such assembly.

Based on the number of essential features, the closest analog of the proposed assembly is the floating assembly for wave energy use, such assembly comprising floats connected to a rectangular frame and the means for wave energy transformation to electric energy [Invention patent No. 2041385, Russia, IPC 6 F03B13/20, published on 09.08.1995]. The assembly also comprises horizontal and inclined plates located under water and intended to reduce vertical mobility of the assembly.

However, such underwater water horizontal and inclined plates significantly increase the assembly resistance to oncoming waves and so requires the use of enforced anchor-cable system and imposes additional requirements on the strength of the hinges and arms, thus increasing the cost of the assembly and reducing its reliability.

Based on the number of essential features, the closest analog of the proposed assembly is an autonomous catamaran comprising floats attached to a rectangular frame and a drive connected to the frame [C-Enduro catamaran. Information obtained on 22.06.2016 from the site http://hi-news.ru/research-development/avtonomnyj-katamaran-otpravilsya-issledovat-keltskoe-more.html].

The drive of the described catamaran is installed on the deck and uses only solar energy, which, does not ensure reliable catamaran operation during fall and winter seasons. In addition, floats rigidly attached to the rectangular frame increase the vessel resistance to oncoming waves, which may cause even capsizing of such vessel, and, therefore, the reliability of the vessel is insufficient.

From US 1 270 221A a power-generating apparatus is known which operation is accomplished with waves from the sea. The apparatus comprises a pair of drive shafts rotating through the raising and lowering of a plurality of float operated weight controlled arms connected with the shafts. The floats are connected with the arms and the arms are connected with the drive shafts in such a way that the drive shafts will be unaffected by the raising of the arms upon the rise of the floats, but upon the lowering of the arms as the floats fall, the arms will be locked to the drive shafts to cause the turning of the drive shafts.

The proposed inventions are aimed at creating more reliable floating assembly and autonomous catamaran comprising such assembly.

The problem is solved by creating conditions to reduce floats resistance to oncoming waves through uniform continuous distribution of the assembly and/or catamaran own weight among the four floats, while providing full mechanical connection between the floats in the process of wave energy conversion.

Similarly to the floating assemblies known in the art, the proposed floating assembly for wave energy use comprises floats attached to a rectangular frame and connected to a means for converting wave energy into electric energy, while the assembly according to the invention additionally comprises small frames kinematically coupled with the rectangular frame, the number of said small frames is equal to the number of the floats, and each float is movably connected to the small frame by two parallel horizontally arranged arms, main and auxiliary ones, wherein in the top view the floats are arranged in a snake-like pattern, they alternate along parallel sides of the rectangular frame and are offset from each other, for example as follows: the first right one is pivoted on the arms forwards, the second left one is pivoted on the arms backwards, the third right one is pivoted on the arms forwards, the fourth left one is pivoted on the arms backwards, the main and auxiliary arms of each float are connected, respectively, to main and auxiliary torsion bars of the assembly, main arms of the front and rear float pairs are interconnected by a rod with the possibility of their synchronous rotation in one direction, wherein the rod of the front arms pair is located on top and the linkage arms have upward orientation, the rod of the rear arms pair is located below and the linkage arms have downward orientation, the front and rear pairs of main arms are interconnected by a linkage rod with the possibility of their synchronous rotation in opposite directions, and the means for converting wave energy into electric energy comprises a hydraulic accumulator, a hydraulic motor, an electric generator and double-acting hydraulic cylinders, one of said double-acting hydraulic cylinders is located between the linkage rod and the rectangular frame, while the others are located between the main and auxiliary arms of each float, and are intended to transform mechanical energy resulting from floats up and down movements and/or their swinging in the head-stern direction into the energy generated through power fluid pressure change in the hydraulic cylinder chambers in the process of piston movement and accumulated in the hydraulic accumulator, the output of which is connected to the hydraulic motor kinematically coupled with the electric generator shaft.

Similarly to the autonomous catamaran known in the art, the proposed autonomous catamaran comprises floats attached to a rectangular frame and a catamaran drive coupled with the frame, while the catamaran according to the invention additionally comprises small frames kinematically coupled with the rectangular frame, the number of said small frames is equal to the number of the floats, and each float is movably connected to the small frame by two parallel horizontally arranged arms, main and auxiliary ones, wherein in the top view the floats are arranged in a snake-like pattern, they alternate along parallel sides of the rectangular frame and are offset from each other, for example as follows: the first right one is pivoted on the arms forwards, the second left one is pivoted on the arms backwards, the third right one is pivoted on the arms forwards, the fourth left one is pivoted on the arms backwards, the main and auxiliary arms of each float are connected, respectively, to main and auxiliary torsion bars of the assembly, main arms of the front and rear float pairs are interconnected by a rod with the possibility of their synchronous rotation in one direction, wherein the rod of the front arms pair is located on top and the linkage arms have upward orientation, the rod of the rear arms pair is located below and the linkage arms have downward orientation, the front and rear pairs of main arms are interconnected by a linkage rod with the possibility of their synchronous rotation in opposite directions, and the catamaran drive is configured as the means for converting wave energy into electric energy and comprises a hydraulic accumulator, a hydraulic motor, an electric generator, an electric motor drive with propulsive screw, and double-acting hydraulic cylinders, one of said double-acting hydraulic cylinders is located between the linkage rod and the rectangular frame, while the others are located between the main and auxiliary arms of each float, and are intended to transform mechanical energy resulting from floats up and down movements and/or their swinging in the head-stern direction into the energy generated through power fluid pressure change in the hydraulic cylinder chambers in the process of piston movement and accumulated in the hydraulic accumulator, the output of which is connected to the hydraulic motor kinematically coupled with the electric generator shaft, having its electric output galvanically connected to the winding of the electric motor drive, while a propulsive screw is mounted on the shaft thereof, said propulsive screw allowing the catamaran to move autonomously on the water surface.

The proposed floating assembly for the conversion of wave energy comprises small frames kinematically coupled with the rectangular frame. The number of small frames is equal to the number of the floats. Each small frame has a float movably attached thereon and coupled therewith by two horizontal arms with torsion bars, i.e. main and auxiliary ones. The main arm with the torsion bar has two linkage arms attached thereon, one of said arms being intended for a double-acting hydraulic cylinder and another one being intended for linkage rod. One linkage arm for a double-acting hydraulic cylinder is attached on the auxiliary arm with the torsion bar. The use of arms in the form of torsion springs having low torsional rigidity in the structure allows to simplify it, since optimal angle of rotation (twist angle) is set for each torsion bar. A double-acting hydraulic cylinder is installed between the main arm and auxiliary arm of the float to convert the energy of the float swinging in the head-stern direction. Four small frames with floats are attached to the rectangular frame in such a way that in the top view the floats are arranged in a snake-like pattern, alternating along the parallel sides of the rectangular frame and being offset from each other (e.g., from front to rear): in the first right one the arms are turned forward, in the second left one the arms are turned back, in the third right one the arms are turned forward, in the fourth left one the arms are turned back. The main arms of the front pair and the rear pair of floats are interconnected by the rod allowing its synchronous rotation in the same direction. The rod of the front pair of arms is located at the top (linkage arms have upward orientation), while the rod of the rear pair of arms is located below (linkage arms have downward orientation). The front and rear pairs of main arms are interconnected by the linkage rod allowing their synchronous rotation in the opposite directions. The double-acting hydraulic cylinder is installed between the linkage rod and frame to convert the energy of floats up and down movements. Such arrangement and connection of floats as well as the presence of double-acting hydraulic cylinders in the structure make it possible to convert wave energy into mechanical energy resulting from floats up and down movements and/or their swinging in the head-stern direction into the energy generated through power fluid pressure change in the hydraulic cylinder chambers in the process of piston movement and accumulated in the hydraulic accumulator. The hydraulic accumulator output is connected to the hydraulic motor kinematically coupled with the shaft of electric generator that generates electric energy, which is supplied to a consumer via cable.

Unlike the floating assembly for wave energy conversion, in the autonomous catamaran the output of the electric generator is galvanically connected to the winding of the electric motor drive, while a propulsive screw is mounted on the shaft thereof, said propulsive screw allowing the catamaran to move autonomously on the water surface. For this purpose, the catamaran is also provided with a rudder, an anchor and a system for controlling watercraft propulsion on the water surface.

At the time of patent information research performed in the process of the present application preparation the authors have not revealed any constructions of floating assemblies for the use of wave energy and autonomous catamarans possessing the above mentioned set of essential features, which proves that the claimed technical solutions comply with "novelty" patentability criterion.

The technical result obtained through realization of the proposed inventions is in creating conditions to reduce floats resistance to oncoming waves through uniform continuous distribution of the assembly and/or catamaran own weight among the four floats, while providing full mechanical connection between the floats in the process of wave energy conversion.

The authors have not revealed the indicated technical result in the known technical solutions of the prior art, therefore the proposed assembly and catamaran may be deemed to comply with the "inventive step" patentability criterion.

The proposed floating assembly for use of wave energy and autonomous catamaran consist of structural elements, which may be manufactured using presently known technological methods, means and materials. They can be used in various sectors of economy and, therefore, it is possible to conclude that the proposed solutions comply with "industrial applicability" invention patentability criterion.

The essence of the proposed inventions is further explained by schematic drawings, where:
FIG. 1 shows the kinematic diagram of the floating assembly for use of wave energy;
FIG. 2 shows the hydraulic and electromechanical diagrams of the proposed devices;
FIG. 3 shows the small frame with the float;
FIG. 4 shows assembled floating assembly for use of wave energy;
FIGs. 5, 6 show floating assembly for use of wave energy in working position (top view);
FIG. 7 shows the floating assembly for use of wave energy in working position (side view).
FIG. 8 shows a general view of autonomous catamaran.

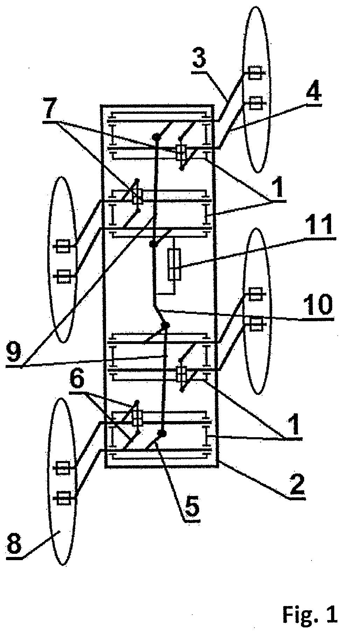

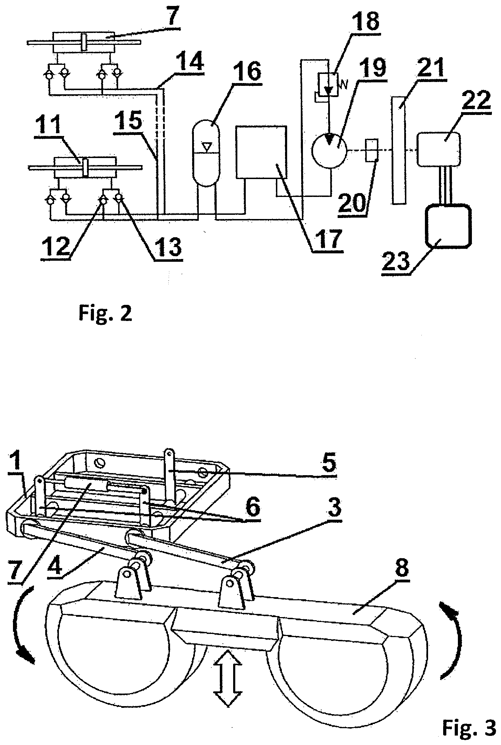

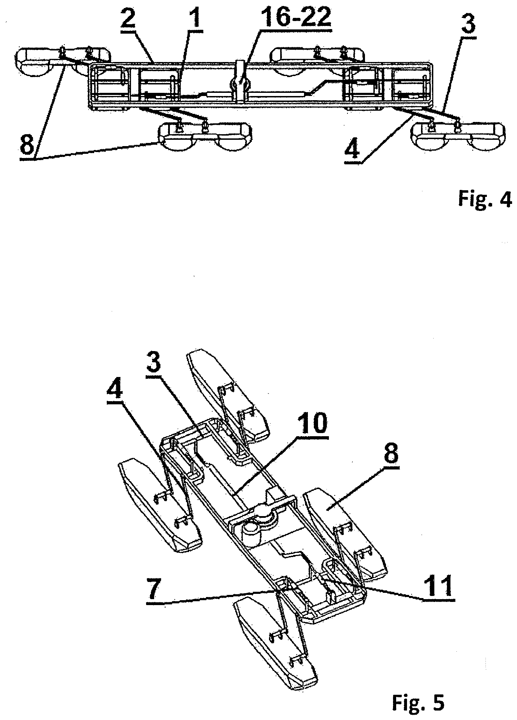

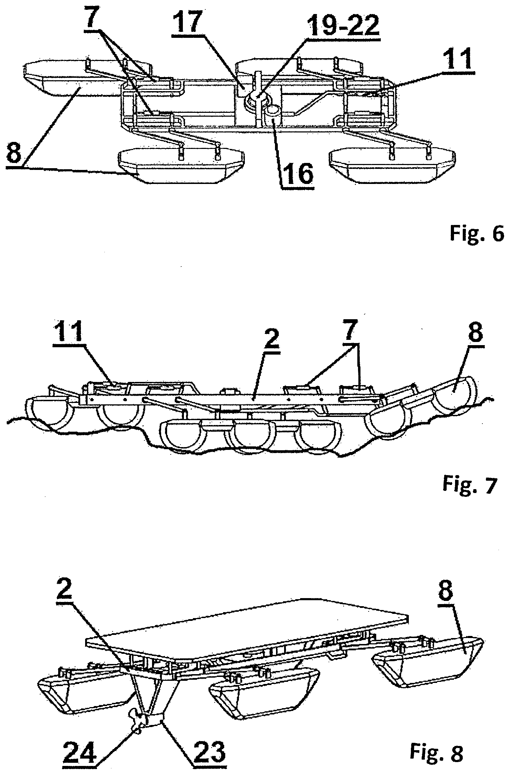

Floating assembly for use of wave energy (FIGs. 1, 3) consists of four small frames 1, a rectangular frame 2, a main arm with a torsion bar 3, an auxiliary arm with a torsion bar 4, linkage arms of the main torsion bar 5, linkage arms 6, four double-acting hydraulic cylinders 7, floats 8, rods 9, linkage rods 10 and a double acting hydraulic cylinder 11. For different operating conditions, float 8 may be made in two versions shown in FIGs. 3 and 6. The proposed assembly is also provided with a hydraulic system (FIGs. 2, 6), comprising check valves 12 and 13 connected to the flow line 14 (valves 13) and to the high pressure line 15 (valves 12). The high pressure line 15 is connected to the hydraulic accumulator 16. The hydraulic system comprises a power fluid tank 17 for feeding hydraulic fluid into hydraulic system. Hydraulic accumulator 16 is connected through a pressure regulator 18 to hydraulic motor 19, the shaft of said motor is connected through the free-wheel clutch 20 to the flywheel shaft 21 and electric generator shaft 22, while the electric generator outputs generated electric energy to a consumer via a cable (not shown). In case of low generated power, the floating assembly for conversion of wave energy may have a simplified structure shown in FIGs. 5, 6, i.e. on one frame and with one main double-sided arm 3 for each of the front and rear pairs of floats 8. To fix the assembly position on the water surface the assembly is equipped with an anchor connected to the winch mounted on the rectangular frame 2 with an anchor rope (not shown).

Autonomous catamaran (FIG. 8), as well as the floating assembly for use of wave energy, comprises all the above mentioned elements and, in addition to that, comprises a deck rigidly fixed on the rectangular frame 2 and intended for placing payload and/or research equipment and/or deck-house thereon (not shown). In addition, the electric generator 22 output is galvanically connected to the winding of the electric motor drive 23, while propulsive screw 24 is mounted on the shaft thereof, said propulsive screw allowing the catamaran to move autonomously on the water surface. The catamaran may also contain a backup source, e.g. a battery, for powering the electric motor drive 23 (not shown). To allow the catamaran movement on the water surface, the catamaran is equipped with a system for controlling watercraft propulsion on the water surface, an anchor with an anchor rope and a rudder (not shown). The system for controlling watercraft propulsion on the water surface enables its operation in both manual and autonomous mode. The known devices such as described, for example, in Russian patents Nos. 2248914, 2319641 may be used as the system for controlling catamaran propulsion on the water surface. The system for controlling catamaran propulsion on the water surface comprises a controller allowing to observe the catamaran movement dynamics on a special display and also to control its movement in the manual mode, for which purpose it comprises computer (personal computer with a corresponding software product), mode setter, rudder gear, heading, angular velocity and rudder position sensors connected to the corresponding inputs of the computer, which ensures high-quality and safe navigation on the water surface.

Floating assembly for use of wave energy operates as follows.

The position of the floating assembly for the conversion of wave energy is fixed on a pre-selected part of the waters using an anchor or an anchor system (not shown). Effected by oncoming and decreasing waves, each float 8 (FIG. 3) movably mounted on the small frame 1 using the main 3 and auxiliary 4 arms with torsion bars, respectively, moves up and down, and also may rotate. Meanwhile, the linkage arm of the main torsion bar 5 and the linkage arms of the hydraulic cylinders 6 change their mutual position, which, in turn, results in the translational movement of hydraulic cylinder piston rod 7 and, through the rods 9 and 10, the hydraulic cylinder piston rod 11 as well. When a wave arrives, the float 8 closest to it (in the direction along the rectangular frame 2) moves up and rotates changing the position of the linkage arms 5 and 6, and the second float 8 moves down and rotates due to the linkage arms 5 and the rod 9. The second pair of floats 8 behaves in the same manner. The front and rear pairs of floats 8 are interconnected through the linkage arms 5 and the linkage rod 10 in such a way that, in calm water, the frame 2 is in a horizontal position. To ensure proper operation and stability of the floating assembly (FIGs. 4, 5, 6) to convert the waves energy, the linkage arms 5 of the front pair of main arms with torsion bar 3 have upward orientation, while linkage arms 5 of the rear pair of main arms with torsion bar 3 have downward orientation. A wave passage through the assembly (FIG. 7) causes a change in the mutual position of the floats 8 and the frame 2, and, consequently, a change in the position of the linkage arms 5, 6, rods 9, 10 and the double-acting hydraulic cylinder piston rods 7. Double-acting hydraulic cylinders 7 move, via check valves 12 and 13, power fluid from tank 17 through pipelines 14 and 15 into hydraulic accumulator 16, converting wave energy into the energy of compressible power fluid (hydraulic fluid). The power fluid from the hydraulic accumulator 16 drives, through the pressure regulator 18, the hydraulic motor 19, which rotates the flywheel 21 and the electric generator 22 via the free-wheel clutch 20, and the electric energy thus generated is supplied to the consumer via a cable running along the anchor rope and on the bottom of the waters (not shown). Adjusting the sizes of the rectangular frame 2, float 8, main arms with torsion bar 3, auxiliary arms 4, linkage arms 5 and 6, hydraulic cylinders 7 and 11, hydraulic motor 19, and electric generator 22 may allow to optimize the assembly in accordance with the prevailing conditions at the place of use (wave interval and height) and to increase or decrease the amount of electric energy generated.

The proposed arrangement of structural elements allows the floating assembly for the conversion of wave energy to roll smoothly over the waves without mechanical stresses of dangerous values arising therein. This increases the assembly reliability, durability and reduces materials consumption. The assembly operation does not require the use of permanent structures. It is easy to maintain and operate.

Autonomous catamaran (FIG. 8) operates as follows.

In the proposed autonomous catamaran, the electric energy is generated in the same manner as in the floating assembly for use of wave energy, which is described above. Prior to outbounding, a catamaran deck is loaded with a payload and its anchor is heaved up. The catamaran's hydraulic system converts wave energy into electric energy, which is supplied to electric motor drive 23 having a shaft with propulsion screw 24 mounted thereon and also to the system for controlling catamaran propulsion on the water surface. The turned on controller allows to monitor catamaran's movement dynamics on a special display and also to control its movement in manual mode. The controller of the system for controlling catamaran propulsion on the water surface makes it possible to control a vessel movement manually, based on the heading, angular velocity and rudder position sensors data and with visual control. The control system also allows autonomous movement of the catamaran on the water surface using a computer (personal computer with a corresponding software product), mode setter, rudder gear, heading, angular velocity and rudder position sensors connected to the corresponding inputs of the computer, which ensures high-quality and safe navigation on the water surface. Since there is practically no absolute calm in natural waters, the proposed catamaran enables continuous process of power generation, even with float 8 swinging in the head-stern direction, which provides for an arbitrarily long autonomous voyage of a catamaran.

The proposed catamaran is simple to manufacture, has reduced resistance to the oncoming waves, increased mechanical strength and, thus, high reliability.

## Claims

1. A floating assembly for wave energy use comprising four floats (8) kinematically attached to a rectangular frame (2) and connected to a means for converting wave energy into electric energy, wherein in the top view the floats (8) are arranged in a snake-like pattern in the head-stern direction along the rectangular frame (2), they alternate along parallel sides of the rectangular frame (2) and are offset from each other, wherein a front float pair comprises a first right float (8) and a second left float (8) and a rear float pair comprises a third right float (8) and a fourth left float (8), the assembly additionally comprises small frames (1) kinematically coupled with the rectangular frame (2), the number of said small frames (1) is equal to the number of the floats (8), and each float (8) is movably connected to the small frame (1) by two parallel horizontally arranged arms (3, 4), main and auxiliary ones, **characterised in that** the main and auxiliary arms (3, 4) of each float (8) are connected, respectively, to main and auxiliary torsion bars of the assembly, the main arms (3) of the front float pair and the rear float pair, respectively, are interconnected by a rod (9) and linkage arms (5) with the possibility of their synchronous rotation in one direction,
wherein the rod (9) of the main arms (3) of the front float pair is located on top and the linkage arms (5) have upward orientation, the rod (9) of the main arms (3) of the rear float pair is located below and the linkage arms (5) have downward orientation,
the front and rear pairs of main arms (3) are interconnected by a linkage rod (10) with the possibility of their synchronous rotation in opposite directions, and
the means for converting wave energy into electric energy comprises a hydraulic accumulator (16), a hydraulic motor (19), an electric generator (22) and double-acting hydraulic cylinders (7), one of said double-acting hydraulic cylinders (7) is located between the linkage rod (10) and the rectangular frame (2), while the others are located between the main and auxiliary arms (3, 4) of each float (8), and are intended to transform mechanical energy resulting from floats (8) up and down movements and/or their swinging in the head-stern direction into the energy generated through power fluid pressure change in the hydraulic cylinder chambers in the process of piston movement and accumulated in the hydraulic accumulator (16), the output of which is connected to the hydraulic motor (19) kinematically coupled with the electric generator (22) shaft.

2. The floating assembly according to claim 1, wherein the floats (8) are arranged as follows: the first right one is pivoted on the arms (3, 4) forwards, the second left one is pivoted on the arms (3, 4) backwards, the third right one is pivoted on the arms (3, 4) forwards, the fourth left one is pivoted on the arms (3, 4) backwards.

3. An autonomous catamaran comprising four floats (8) attached to a rectangular frame (2) and a catamaran drive coupled with the frame (2), wherein in the top view the floats (8) are arranged in a snake-like pattern in the head-stern direction along the rectangular frame (2), they alternate along parallel sides of the rectangular frame (2) and are offset from each other, wherein a front float pair comprises a first right float (8) and a second left float (8) and a rear float pair comprises a third right float (8) and a fourth left float (8),
the catamaran additionally comprises small frames (1) kinematically coupled with the rectangular frame (2), the number of said small frames (1) is equal to the number of the floats (8), and each float (8) is movably connected to the small frame (1) by two parallel horizontally arranged arms (3, 4), main and auxiliary ones,
the main and auxiliary arms (3, 4) of each float (8) are connected, respectively, to main and auxiliary torsion bars of the assembly, the main arms (3) of the front pair and the rear float pair, respectively, are interconnected by a rod (9) and linkage arms (5) with the possibility of their synchronous rotation in one direction,
wherein the rod (9) of the main arms (3) of the front float pair is located on top and the linkage arms (5) have upward orientation, the rod (9) of the main arms (3) of the rear float pair is located below and the linkage arms (5) have downward orientation,
the front and rear pairs of main arms (3) are interconnected by a linkage rod (10) with the possibility of their synchronous rotation in opposite directions, and
the catamaran drive is configured as the means for converting wave energy into electric energy and comprises a hydraulic accumulator (16), a hydraulic motor (19), an electric generator (22), an electric motor drive (23) with propulsive screw (24), and double-acting hydraulic cylinders (7), one of said double-acting hydraulic cylinders (7) is located between the linkage rod (10) and the rectangular frame (2), while the others are located between the main and auxiliary arms (3, 4) of each float (8), and are intended to transform mechanical energy resulting from floats (8) up and down movements and/or their swinging in the head-stern direction into the energy generated through power fluid pressure change in the hydraulic cylinder chambers in the process of piston movement and accumulated in the hydraulic accumulator (16), the output of which is connected to the hydraulic motor (19) kinematically coupled with the electric generator (22) shaft, having its electric output galvanically connected to the winding of the electric motor drive (23), while the propulsive screw (24) is mounted on the shaft thereof, said propulsive screw (24) allowing the catamaran to move autonomously on the water surface.

4. The autonomous catamaran according to claim 3, wherein the floats (8) are arranged as follows: the first right one is pivoted on the arms (3, 4) forwards, the second left one is pivoted on the arms (3, 4) backwards, the third right one is pivoted on the arms (3, 4) forwards, the fourth left one is pivoted on the arms (3, 4) backwards.

## Patentansprüche

1. Schwimmende Anlage zur Nutzung von Wellenenergie, umfassend vier Schwimmer (8), die kinematisch an einem rechteckigen Rahmen (2) befestigt und mit einem Mittel zur Umwandlung von Wellenenergie in elektrische Energie verbunden sind, wobei in Draufsicht die Schwimmer (8) in einem schlangenartigen Muster in Bug-Heck Ausrichtung entlang des rechteckigen Rahmens (2) angeordnet sind, sie alternieren entlang paralleler Seiten des rechteckigen Rahmens (2) und sind zu einander versetzt, wobei ein vorderes Schwimmerpaar einen ersten rechten Schwimmer (8) und einen zweiten linken Schwimmer (8) umfasst und ein hinteres Schwimmerpaar einen dritten rechten Schwimmer (8) und einen vierten linken Schwimmer (8) umfasst,
wobei die Anlage zusätzlich kleine Rahmen (1) umfasst, die kinematisch mit dem rechteckigen Rahmen (2) verbunden sind, wobei die Anzahl der genannten kleinen Rahmen (1) gleich der Anzahl der Schwimmer (8) ist und jeder Schwimmer (8) beweglich mit dem kleinen Rahmen (1) über zwei parallele, waagerecht angeordnete Arme (3, 4), einem Haupt- und einem Behelfsarm, verbunden ist,
**dadurch gekennzeichnet, dass** die Haupt- und Behelfsarme (3, 4) jedes Schwimmers (8) mit Haupt- bzw. Behelfstorsionsstangen der Anlage verbunden sind, wobei die Hauptarme (3) des vorderen Schwimmerpaars bzw. des hinteren Schwimmerpaars untereinander mit einer Stange (9) und Verbindungsarmen (5) mit der Möglichkeit ihrer synchronen Drehung in eine Richtung verbunden sind,
wobei die Stange (9) der Hauptarme (3) des vorderen Schwimmerpaars oben angeordnet ist und die Verbindungsarme (5) nach oben ausgerichtet sind, die Stange (9) der Hauptarme (3) des hinteren Schwimmerpaars ist unten angeordnet und die Verbindungsarme (5) sind nach unten ausgerichtet,
die vorderen und hinteren Paare der Hauptarme (3) sind untereinander mit einer Verbindungsstange (10) verbunden mit der Möglichkeit ihrer synchronen Drehung in entgegengesetzte Richtungen, und
das Mittel zur Umwandlung von Wellenenergie in elektrische Energie einen Hydraulikspeicher (16), einen hydraulischen Motor (19), einen elektrischen Generator (22) und doppelwirkende hydraulische Zylinder (7) umfasst, wobei einer der doppelwirkenden hydraulischen Zylinder (7) zwischen der Verbindungsstange (10) und dem rechteckigen Rahmen (2) angeordnet ist, während die anderen zwischen den Haupt- und Behelfsarmen (3, 4) jedes Schwimmers (8) angeordnet sind und zur Umwandlung mechanischer Energie, die durch die Aufwärts- und Abwärtsbewegungen der Schwimmer (8) und/oder ihr Pendeln in der Bug-Heck Richtung erzeugt wird, in die Energie vorgesehen sind, die durch die Änderung des Drucks der Arbeitsflüssigkeit in den Kammern des hydraulischen Zylinders während der Bewegung des Kolbens erzeugt und in dem Hydraulikspeicher (16) gespeichert wird, dessen Ausgang mit dem hydraulischen Motor (19) verbunden ist, der kinematisch mit der Welle des elektrischen Generators (22) verbunden ist.

2. Schwimmende Anlage nach Anspruch 1, wobei die Schwimmer (8) wie folgt angeordnet sind: der erste rechts ist vorwärts schwenkbar an den Armen (3, 4), der zweite links ist rückwärts schwenkbar an den Armen (3, 4), der dritte rechts ist vorwärts schwenkbar an den Armen (3, 4), der vierte links ist rückwärts schwenkbar an den Armen (3, 4).

3. Autonomer Katamaran, umfassend vier Schwimmer (8), die an einem rechteckigen Rahmen (2) befestigt sind, und einen Katamaranantrieb, der mit dem Rahmen (2) verbunden ist, wobei in Draufsicht die Schwimmer (8) in einem schlangenartigen Muster in Bug-Heck Ausrichtung entlang des rechteckigen Rahmens (2) angeordnet sind, sie alternieren entlang paralleler Seiten des rechteckigen Rahmens (2) und sind zu einander versetzt, wobei ein vorderes Schwimmerpaar einen ersten rechten Schwimmer (8) und einen zweiten linken Schwimmer (8) umfasst und ein hinteres Schwimmerpaar einen dritten rechten Schwimmer (8) und einen vierten linken Schwimmer (8) umfasst, wobei der Katamaran zusätzlich kleine Rahmen (1) umfasst, die kinematisch mit dem rechteckigen Rahmen (2) verbunden sind, wobei die Anzahl der genannten kleinen Rahmen (1) gleich der Anzahl der Schwimmer (8) ist und jeder Schwimmer (8) beweglich mit dem kleinen Rahmen (1) über zwei parallele, waagerecht angeordnete Arme (3, 4), einem Haupt- und einem Behelfsarm, verbunden ist,
wobei die Haupt- und Behelfsarme (3, 4) jedes Schwimmers (8) mit Haupt- bzw. Behelfstorsionsstangen der Anlage verbunden sind, wobei die Hauptarme (3) des vorderen Schwimmerpaars bzw. des hinteren Schwimmerpaars untereinander mit einer Stange (9) und Verbindungsarmen (5) mit der Möglichkeit ihrer synchronen Drehung in eine Richtung verbunden sind,
wobei die Stange (9) der Hauptarme (3) des vorderen Schwimmerpaars oben angeordnet ist und die Verbindungsarme (5) nach oben ausgerichtet sind, die Stange (9) der Hauptarme (3) des hinteren Schwimmerpaars ist unten angeordnet und die Verbindungsarme (5) sind nach unten ausgerichtet,
die vorderen und hinteren Paare der Hauptarme (3) sind untereinander mit einer Verbindungsstange (10) verbunden mit der Möglichkeit ihrer synchronen Drehung in entgegengesetzte Richtungen, und
wobei der Katamaranantrieb in Form des Mittels zur Umwandlung von Wellenenergie in elektrische Energie ausgelegt ist und einen Hydraulikspeicher (16), einen hydraulischen Motor (19), einen elektrischen Generator (22), einen elektrischen Motorantrieb (23) mit einer Antriebsschraube (24) und doppelwirkende hydraulische Zylinder (7) umfasst, wobei einer der doppelwirkenden hydraulischen Zylinder (7) zwischen der Verbindungsstange (10) und dem rechteckigen Rahmen (2) angeordnet ist, während die anderen zwischen den Haupt- und Behelfsarmen (3, 4) jedes Schwimmers (8) angeordnet sind und zur Umwandlung mechanischer Energie, die durch die Aufwärts- und Abwärtsbewegungen der Schwimmer (8) und/oder ihr Pendeln in der Bug-Heck Richtung erzeugt wird, in die Energie vorgesehen sind, die durch die Änderung des Drucks der Arbeitsflüssigkeit in den Kammern des hydraulischen Zylinders während der Bewegung des Kolbens erzeugt und in dem Hydraulikspeicher (16) gespeichert wird, dessen Ausgang mit dem hydraulischen Motor (19) verbunden ist, der kinematisch mit der Welle des elektrischen Generators (22) verbunden ist, dessen elektrischer Ausgang galvanisch mit der Wicklung des elektrischen Motorantriebes (23) verbunden ist, während die Antriebsschraube (24) auf seiner Welle angebracht ist, wobei die Antriebsschraube (24) ein autonomes Bewegen des Katamaran auf der Wasseroberfläche erlaubt.

4. Autonomer Katamaran nach Anspruch 3, wobei die Schwimmer (8) wie folgt angeordnet sind: der erste rechts ist vorwärts schwenkbar an den Armen (3, 4), der zweite links ist rückwärts schwenkbar an den Armen (3, 4), der dritte rechts ist vorwärts schwenkbar an den Armen (3, 4), der vierte links ist rückwärts schwenkbar an den Armen (3, 4).

## Revendications

1. Ensemble flottant pour l'utilisation de l'énergie marémotrice comprenant quatre flotteurs (8) fixés cinématiquement à un cadre rectangulaire (2) et raccordés à un système permettant de convertir l'énergie marémotrice en énergie électrique, dans lequel dans la vue du dessus, les flotteurs (8) sont agencés dans un motif semblable à un serpent dans la direction proue-poupe le long d'un cadre rectangulaire (2), ils alternent le long de côtés parallèles du cadre rectangulaire (2) et sont décalés l'un par rapport à l'autre, dans lequel une paire de flotteurs avant comprend un premier flotteur droit (8) et un deuxième flotteur gauche (8) et une paire de flotteurs arrière comprend un troisième flotteur droit (8) et un quatrième flotteur gauche (8),
l'ensemble comprend en outre de petits cadres (1) cinématiquement raccordés au cadre rectangulaire (2), le nombre desdits petits cadres (1) est égal au nombre de flotteurs (8), et chaque flotteur (8) est raccordé de manière mobile au petit cadre (1) par deux bras parallèles agencés de manière horizontale (3, 4), le bras principal et le bras auxiliaire,
**caractérisé en ce que**
le bras principal et le bras auxiliaire (3, 4) de chaque flotteur (8) sont raccordés, respectivement, à des barres de torsion principale et auxiliaire de l'ensemble, les bras principaux (3) de la paire de flotteurs avant et de la paire de flotteurs arrière, respectivement, sont interconnectés par une tige (9) et des bras de liaison (5) avec une possibilité de rotation synchrone de ceux-ci dans une direction,
dans lequel la tige (9) des bras principaux (3) de la paire de flotteurs avant est située sur le haut et les bras de liaison (5) présentent une orientation vers le haut, la tige (9) des bras principaux (3) de la paire de flotteurs arrière est située en dessous et les bras de liaison (5) présentent une orientation vers le bas,
les paires avant et arrière de bras principaux (3) sont interconnectées par une tige de liaison (10) avec une possibilité de rotation synchrone de ceux-ci dans des directions opposées, et
les moyens permettant de convertir l'énergie marémotrice en énergie électrique comprennent un accumulateur hydraulique (16), un moteur hydraulique (19), un générateur électrique (22) et des cylindres hydrauliques double action (7), un desdits cylindres hydrauliques double action (7) est situé entre la tige de liaison (10) et le cadre rectangulaire (2), tandis que les autres sont situés entre le bras principal et le bras auxiliaire (3, 4) de chaque flotteur (8), et sont destinés à transformer l'énergie mécanique résultant des mouvements vers le haut et vers le bas des flotteurs (8), et/ou leur oscillation dans la direction proue-poupe en l'énergie générée à travers un changement de pression de fluide de puissance dans les chambres du cylindre hydraulique dans le processus de mouvement du piston et accumulée dans l'accumulateur hydraulique (16), dont la sortie est reliée au moteur hydraulique (19) cinématiquement couplé à l'arbre du générateur électrique (22).

2. Ensemble flottant selon la revendication 1, dans lequel les flotteurs (8) sont agencés comme suit : un premier droit pivote sur les bras (3, 4) vers l'avant, un deuxième gauche pivote sur les bras (3, 4) vers l'arrière, un troisième droit pivote sur les bras (3, 4) vers l'avant, un quatrième gauche pivote sur les bras (3, 4) vers l'arrière.

3. Catamaran autonome comprenant quatre flotteurs (8) fixés à un cadre rectangulaire (2) et une commande de catamaran raccordée au cadre (2), dans lequel dans la vue d'en haut, les flotteurs (8) sont agencés dans un motif semblable à un serpent dans la direction proue-poupe le long du cadre rectangulaire (2), ils alternent le long de côtés parallèles du cadre rectangulaire (2) et sont décalés l'un par rapport à l'autre, dans lequel une paire de flotteurs avant comprend un premier flotteur droit (8) et un deuxième flotteur gauche (8) et une paire de flotteurs arrière comprend un troisième flotteur droit (8) et un quatrième flotteur gauche (8),
le catamaran comprend en outre des petits cadres (1) cinématiquement raccordés au cadre rectangulaire (2), le nombre desdits petits cadres (1) est égal au nombre de flotteurs (8), et chaque flotteur (8) est raccordé de manière mobile au petit cadre (1) par deux bras parallèles agencés de manière horizontale (3, 4), le bras principal et le bras auxiliaire,
le bras principal et le bras auxiliaire (3, 4) de chaque flotteur (8) sont raccordés, respectivement, à des barres de torsion principale et auxiliaire de l'ensemble, les bras principaux (3) de la paire de flotteurs avant et de la paire de flotteurs arrière, respectivement, sont interconnectés par une tige (9) et des bras de liaison (5) avec une possibilité de rotation synchrone de ceux-ci dans une direction,
dans lequel la tige (9) des bras principaux (3) de la paire de flotteurs avant est située sur le haut et les bras de liaison (5) présentent une orientation vers le haut, la tige (9) des bras principaux (3) de la paire de flotteurs arrière est située en dessous et les bras de liaison (5) présentent une orientation vers le bas,
les paires avant et arrière de bras principaux (3) sont interconnectées par une tige de liaison (10) avec une possibilité de rotation synchrone de ceux-ci dans des directions opposées, et
la commande de catamaran est configuré comme les moyens permettant de convertir l'énergie marémotrice en énergie électrique et comprend un accumulateur hydraulique (16), un moteur hydraulique (19), un générateur électrique (22), une commande de moteur électrique (23) avec une vis propulsive (24), et des cylindres hydrauliques double action (7), un desdits cylindres hydrauliques double action (7) est situé entre la tige de liaison (10) et le cadre rectangulaire (2), tandis que les autres sont situés entre le bras principal et le bras auxiliaire (3, 4) de chaque flotteur (8), et sont destinés à transformer l'énergie mécanique résultant des mouvements vers le haut et vers le bas des flotteurs (8), et/ou de leur oscillation dans la direction proue-poupe en l'énergie générée à travers un changement de pression de fluide de puissance dans les chambres du cylindre hydraulique dans le processus de mouvement du piston et accumulée dans l'accumulateur hydraulique (16), dont la sortie est reliée au moteur hydraulique (19) cinématiquement couplé à l'arbre du générateur électrique (22), présentant sa sortie électrique galvaniquement couplée à l'enroulement de la commande de moteur électrique (23), tandis que la vis propulsive (24) est montée sur son arbre, ladite vis propulsive (24) permettant au catamaran de se déplacer de manière autonome à la surface de l'eau.

4. Catamaran autonome selon la revendication 3, dans lequel les flotteurs (8) sont agencés comme suit : un premier droit pivote sur les bras (3, 4) vers l'avant, un deuxième gauche pivote sur les bras (3, 4) vers l'arrière, un troisième droit pivote sur les bras (3, 4) vers l'avant, un quatrième gauche pivote sur les bras (3, 4) vers l'arrière.
